# EUROPÄISCHE PATENTSCHRIFT

(11) **EP 0 556 558 B1**
(45) Veröffentlichungstag und Bekanntmachung des Hinweises auf die Patenterteilung: **17.04.2002**
(21) Anmeldenummer: 93100464.2
(22) Anmeldetag: 14.01.1993
(51) Int. Cl.: G01N 27/49, G01N 27/416, G01N 33/00

(54) **Elektrochemische Messzelle zur Bestimmung von Ammoniak, Aminen, Hydrazin und Hydrazinderivaten**
Electrochemical measuring cell for the determination of ammonia, amines, hydrazine and hydrazine derivatives
Cellule de mesure électrochimique pour la détermination de l'ammoniac, des amines, de l'hydrazine et des dérivés d'hydrazine

(30) Priorität: 20.02.1992 DE 4205157
(43) Veröffentlichungstag der Anmeldung: 25.08.1993
(73) Patentinhaber: Drägerwerk Aktiengesellschaft, 23542 Lübeck (DE)
(72) Erfinder: Kiesele, Herbert, Dr., W-2400 Lübeck (DE); Haupt, Stephan, Dr., W-2400 Lübeck (DE); Kühn, Uwe, W-2067 Wesenberg (DE)

(56) Entgegenhaltungen:
- DE-A- 3 914 284
- US-A- 4 287 027
- US-A- 4 311 569
- US-A- 4 876 115
- US-A- 4 961 834
- US-A- 5 057 436

## Beschreibung

Die Erfindung betrifft eine elektrochemische Meßzelle zur Bestimmung von Ammoniak, Aminen, Hydrazin und Hydrazinderivaten in einer gasförmigen oder flüssigen Meßprobe mit mindestens einer Meßelektrode und einer Gegenelektrode, von denen zumindest die Meßelektrode mit einem ein Übergangsmetalloxid enthaltenden Überzug versehen ist und die in einer mit einem löslichen Elektrolyten gefüllten Elektrolytkammer aufgenommen sind, welche zur Meßprobe hin durch eine permeable Membran abgeschlossen ist.

Ammoniak ist eine der wichtigsten Grundchemikalien in der chemischen Industrie (z. B. Düngemittel) und wird in zunehmendem Maße in Kühl- und Entstickungsanlagen (Kraftwerke) eingesetzt. Darüber hinaus entsteht Ammoniak in großem Maßstab bei der Massentierhaltung. Um eine Gefährung auszuschließen, muß die Ammoniak-Konzentration überwacht werden.

Amine sind wichtige Synthesebausteine in der Chemie und entstehen bei natürlichen Abbauprozessen (Lebensmittelindustrie). Hydrazin und Hydrazinderivate spielen in drei Bereichen eine wichtige Rolle, nämlich in der chemischen Industrie, beim Korrosionsschutz (Kesselwasser) und bei Raketentreibstoffen. In allen Fällen ist eine kontinuierliche und empfindliche Messung nötig, um entsprechende Anlagen zu überwachen und ggf. vor schädlichen Konzentrationen zu warnen.

Eine elektrochemische Meßzelle zur Bestimmung von Ammoniak oder Hydrazin ist aus der DE 39 14 284 bekanntgeworden.

Die bekannte Meßzelle besitzt in einer Elektrolytkammer mindestens eine Meßelektrode und eine Gegenelektrode, ggf. auch eine Referenzelektrode, wobei zumindest die Meßelektrode mit einem Überzug aus Kobaltoxid versehen ist. Diese Oxidelektrode ist in direktem Kontakt mit dem Elektrolyten. Das nachzuweisende Ammoniak oder Hydrazin (bzw. Derivate dieser Verbindungen) wird unmittelbar an der Oberfläche der Oxidelektrode anodisch oxidiert. Man erhält auf diese Weise zwar eine kurze Ansprechzeit auch bei hohen Konzentrationen des nachzuweisenden Schadstoffes, jedoch hat sich gezeigt, daß bei einer gleichbleibend hohen Dauerbelastung über einen längeren Zeitraum von Wochen und Monaten die Meßempfindlichkeit nach einer unerwünscht kurzen Zeit schon so weit nachläßt, daß z. B. eine Nachkalibrierung nötig ist. Außerdem erweist sich die bekannte Meßzelle als in zu hohem Maße querempfindlich gegenüber N0₂ und S0₂. Da diese beiden Gase im Einsatzgebiet der bekannten Meßzelle, wie z.B. bei Kraftwerken, auftreten können, ist diese Querempfindlichkeit mehr als hinderlich für eine gasartspezifische Messung.

Aus der US 4,287,027 ist eine Elektrodenanordnung zum Nachweis von stark reduzierenden Substanzen wie Hydrazin bekannt, bei der die Meßelektrode aus Platin mit einem Überzug aus Platinoxid besteht Die Nachweisreaktion beruht darauf, daß die Platinoxidschicht auf der Meßelektrode durch Hydrazin zu Platin und einer Hydrazinverbindung reduziert wird.

Der vorliegenden Erfindung liegt somit die Aufgabe zugrunde, eine bekannte Meßzelle der genannten Art so zu verbessern, daß ihre Meßempfindlichkeit erhöht, die Signalstabilität bei Dauerbelastung verbessert und ihre Querempfindlichkeit verringert wird.

Zur Lösung der Aufgabe ist vorgesehen, daß die Oxidbestandteile des Überzugs Rutheniumdioxid (Ru0₂) oder Iridiumdioxid (Ir0₂) oder ein Gemisch aus beiden Oxiden sind.

Der Vorteil der Erfindung ist im wesentlichen darin zu sehen, daß sich eine derartige Meßzelle durch hohe Langzeitstabilität auszeichnet. So führte beispielsweise eine Dauerbelastung mit 80 ppm Ammoniak über mehrere Wochen zu keinem meßbaren Signalabfall. Die Empfindlichkeit der Meßzelle konnte wegen des größeren Verhältnisses zwischen Signalstrom zu Grundstrom auf das etwa zwei- bis dreifache erhöht werden. Die fehlende Querempfindlichkeit gegenüber NO₂ und SO₂ sowie gegenüber weiteren Substanzen wie CH₄, CO, CO₂ und Chlor ermöglichen eine aussagekräftige, gasartspezifische Messung. Weiterhin ist der etwa zehnfach höhere Meßdynamikbereich hervorzuheben, der von der vorliegenden Meßzelle auch unter Dauerbelastung überdeckt werden kann. Durch die geschlossene Oxidschicht auf der Meßelektrode wird eine Blockierung der Elektrodenoberfläche im Hinblick auf die stattfindende elektrochemische Reaktion im Elektrolyten vermieden (Elektrodenvergiftung).

Als metallisch leitende Oxide der Platinmetallgruppe kommen die Elemente Ruthenium, Rhodium, Osmium und Iridium in Frage, welche alle ein Dioxid von tetragonaler Kristallstruktur bilden, das sich durch einen niedrigen spezifischen Widerstand in der Größenordnung 10⁻⁵ bis 10⁻⁴ Ohm x cm auszeichnet.

Dabei haben sich die Metalle Ruthenium und Iridium wegen ihrer reproduzierbaren und definierbaren Eigenschaften bei der Herstellung der Elektroden sowie der Oxidschicht als besonders bewährt herausgestellt. Eine besonders gute Elektrodenkonfiguration besteht darin, daß ein Elektrodenträger aus Iridium mit einer Oxidschicht aus Iridiumoxid überzogen wird. Die Ausbildung der Meßelektrode erfolgt am besten dadurch, daß sie in Art einer Gasdiffusionselektrode ausgestaltet ist, indem eine PTFE-Membran mit einem Grundmaterial aus Iridium beschichtet wird, auf welchem die Iridiumoxidschicht aufgebracht ist. Die Beschichtung kann sehr einfach mit Hilfe eines thermischen Verfahrens (Zersetzung von Metallsalzen) durchgeführt werden, oder sie wird auf das Grundmaterial im Sputterverfahren aufgebracht. Eine geeignete Deckschicht bildet sich auch bei der anodischen Belastung von Iridiumelektroden aus, falls das Elektrodenpotential 400mV oder mehr beträgt. Die Bezugselektrode ist dabei eine Iridium-Sinterelektrode. Die Oxidschichtbildung erfolgt somit durch elektrochemische Oxidation des Iridium in der Meßzelle selbst. Dieserart hergestellte Überzüge zeichnen sich durch eine dichte Struktur genügender Dicke aus.

Durch eine Mischung von Oxiden mehrerer Elemente der Platinmetallgruppe läßt sich die Qualität der Oxidschicht verbessern. So erhöht beispielsweise die Zugabe von Iridiumoxid zu Rutheniumoxid die Korrosionsbeständigkeit der Oxidschicht. Dabei ist es zweckmäßig, den Grundkörper aus demjenigen Metall zu gestalten, das auch als Hauptbestandteil in dem Metalloxid oder Oxidgemisch vorliegt. Dadurch werden insbesondere bei der Herstellung einer Diffusionsmembran gute Stabilitätswirkungen erzielt.

Dem Metalloxid oder Oxidgemisch kann ein weiteres Oxid aus der Gruppe der Übergangsmetalle zugemischt werden. So kann z.B. die Überspannung für die Sauerstoffentwicklung durch eine Beimengung von SnO₂ erhöht und damit der Grundstrom reduziert werden.

Der Einsatz der Meßzelle in Kraftwerken macht es wünschenswert, daß insbesondere während einer Langzeitmessung bzw. -überwachung ein Austrocknen des Elektrolyten verhindert wird. Bei der Verwendung in Kühlanlagen ist es notwendig, bei tiefen Temperaturen zu messen. Zu diesem Zwecke wird als Leitelektrolyt ein hygroskopisches Alkali- oder Erdalkalisalz gewählt, welches in Wasser gelöst einen neutralen bis leicht sauren pH-Wert ergibt. Ein solcher Elektrolyt zeichnet sich durch einen niedrigen Wasserdampfdruck sowie einen tiefen Gefrierpunkt aus, der eine minimale Arbeitstemperatur für die Meßzelle bis zu -50 °C erlaubt. Als Beispiele solcher Alkali- oder Erdalkalisalze sind Litiumnitrat (LiNO₃), Calciumnitrat (CaNO₃)₂) sowie Lithiumchlorid (LiCl) und Calciumchlorid (CaCl) in einer Konzentration von etwa 3,5 bis 6 Molar anzusehen, die bis zu 10 Molar erhöht werden kann. Die günstigsten Eigenschaften zeigt eine 6 Molare Lösung, der zur weiteren Stabilisierung des pH-Wertes im Elektrolyten Amoniumsalze (z. B. NH₄NO₃ oder NH₄Cl) in Konzentrationen von 10⁻³ bis 10⁻¹M hinzugefügt sind. Durch die Amoniumsalze werden dem Elektrolyten Amoniumionen zur Verfügung gestellt, wodurch die Meßzelle vorkonditioniert wird: Bei der anodischen Oxidation von NH₃ werden Protonen freigesetzt, die sich mit nachfolgendem NH₃ zu Ammoniumionen verbinden. Wird dem Elektrolyten von vornherein ein Ammoniumsalz zugesetzt, so ist die relative Änderung der NH₄+ - Konzentration geringer, und der pH-Wert wird stabilisiert. Ein auf diese Weise vorkonditionierter Sensor liefert stabilere Signale.

Wählt man LiCl als Leitelektrolyt, wird neben der Gefrierpunkterniedrigung auch die Löslichkeit von NH₃ durch Komplexbildung erweitert: In der Lösung sind die . Lithium-Ionen von einer Solvathülle aus H₂O-Molekülen umgeben, die durch NH₃-Moleküle verdrängt werden, wenn diese per Diffusion aus der Umgebung in den Elektrolyten eindringen. Auf diese Weise gelangt ein regelrechtes "NH₃-Paket" als Umhüllung des Li-Atoms zur Meßelektrode, wodurch die Nachweisempfindlichkeit der Meßzelle erhöht wird.

Bei Zutritt der Meßprobe in den Elektrolyten ändert sich sowohl in der Umgebung der Arbeitselektrode als auch der Hilfselektrode der pH-Wert der Elektrolytlösung. Beispielhaft ist das an dem Fall der Begasung mit Ammoniak in der folgenden Tabelle erläutert:

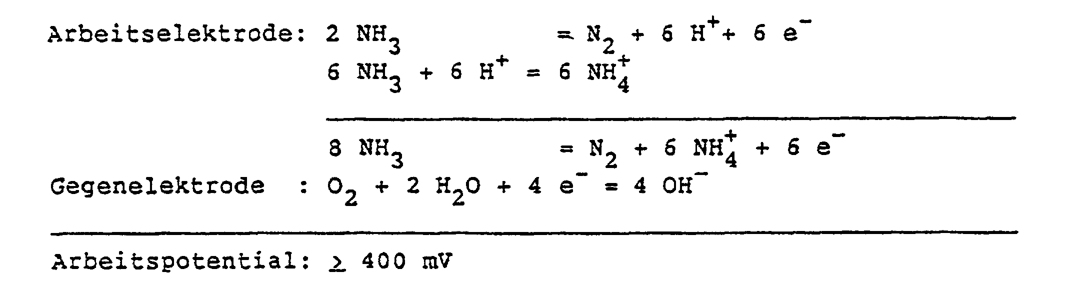

Die gebildeten Hydroxidionen (OH⁻) gelangen nach einigen Stunden über Diffusion an die Arbeits- und Bezugselektrode. Beim Schütteln des Sensors führt die Konvektion innerhalb von Sekunden zu einer Durchmischung der Elektrolytlösung. Dies führt zu einer Potentialverschiebung der Bezugselektrode und zu einer pH-Änderung der Arbeitselektrode und damit zu einer Signaldrift. Um dies zu verhindern, ist es günstig, zwischen der Meßelektrode und der Gegenelektrode eine Ionentauschermembran zur Verhinderung des Hydroxidionentransportes im Elektrolyten einzubauen. Dadurch werden die störenden Ionen an der Membran abgefangen und gelangen nicht zur Meßelektrode. Als besonders günstig hat sich eine Ionentauschermembran aus Nafion (perfluorosulfoniertes PTFE) erwiesen. Sie kann entweder als eigenständige Trennmenbran innerhalb des Elektrolytraums im Gehäuse der Meßzelle eingespannt sein, oder sie kann die Oberfläche der Arbeitselektrode direkt abdecken.

Eine Durchmischung des Elektrolyten bzw. eine zu schnelle Konvektion der Hydroxidionen kann in weiten Grenzen auch schon dadurch vermieden werden, daß der Elektrolyt in einem dicht gepackten Docht aus Glaswolle aufgesogen ist, der seinerseits mit den Elektroden in Kontakt gebracht ist (Elektrolytdocht).

Um die Meßstabilität der Meßzelle weiter zu erhöhen, ist es vorteilhaft, die Gegenelektrode aus der gleichen Zusammensetzung wie die Meßelektrode zu bilden.

Die Gegenelektrode besteht dabei ebenfalls aus einem porösen Grundkörper (Membran), die zur Elektrolytseite hin mit einem porösen Oxidüberzug aus einem Element oder einem Oxidgemisch mehrerer Elemente der Platinmetallgruppe versehen ist. Die nicht mit dem Überzug versehene Fläche der porösen Gegenelektrode liegt im Meßzellengehäuse, jedoch außerhalb des mit dem Elektrolyten gefüllten Innenraums. Sie ist mit einem Filter abgedeckt, welches in der Lage ist, Ammoniak zu binden. Das Filter dient dazu, das durch die elektrochemische Reaktion an der Gegenelektrode aus den Ammoniumionen gebildete Ammoniak aufzunehmen, da es anderenfalls an die Meßelektrode bzw. die Referenzelektrode zurückdiffundieren und dort zu einer Verfälschung des Meßwertes beitragen würde. Als Filtermaterial wird Aktivkohle eingesetzt, die entweder mit ZnSO₄ oder Phosphorsäure beladen ist. Das Gesamtvolumen des Filtermaterials liegt bei 3 mL. Diese Menge ermöglicht eine Betriebsdauer von mehr als 6 Monaten. Im eingebauten Zustand ist die Meßzelle in einem Zellengehäuse aufgenommen, das so gestaltet ist, daß lediglich die Meßelektrode dem zu untersuchenden Gas ausgesetzt ist; die Gegenelektrode weist dabei zwar zur Umgebung hin, sie ist jedoch vor dem Zutritt von dem nachzuweisenden Gas beispielsweise durch eine Blende abgeschirmt.

Um das Bezugspotential der Meßelektrode auf einen bestimmten Wert festzulegen, wird bei sog. Drei-Elektrodenzellen eine Referenzelektrode in den Elektrolyten eingebracht. Diese besitzt günstigerweise die gleiche Zusammensetzung wie die Meßelektrode.

Ein Ausführungsbeispiel der Erfindung wird anhand einer schematischen Zeichnung dargestellt und im folgenden näher erläutert.

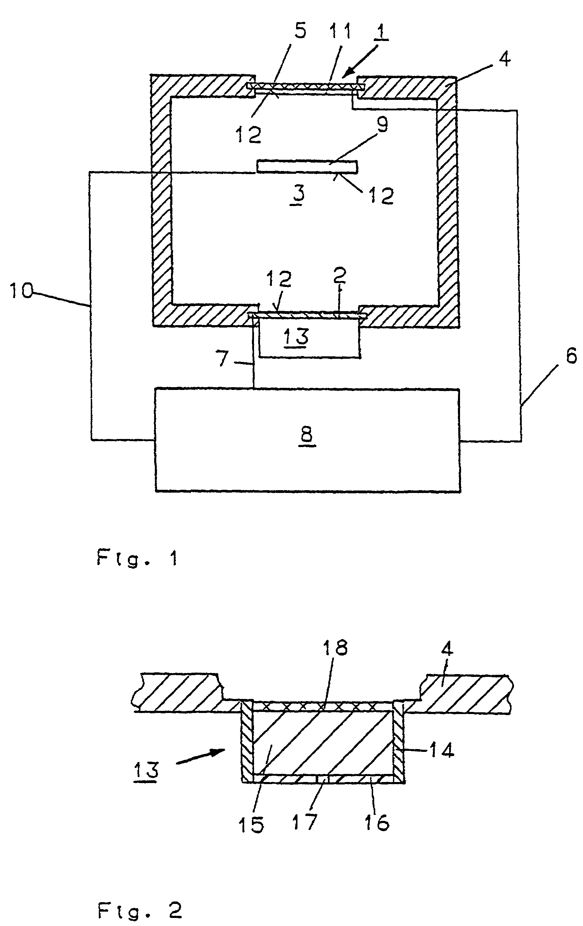

Die Figur 1 zeigt eine elektrochemische Meßzelle mit einem Elektrolyten (3), in welchem eine Meßelektrode (1), eine Gegenelektrode (2) und eine Referenzelektrode (9) eingebracht sind. Die Elektroden (1, 9) bestehen aus einem Trägermaterial aus Iridium, aufgebracht auf eine PTFE-Membran (5), welche zur Umgebung hin in dem Gehäuse (4) der Meßzelle dichtend befestigt ist, und die für Ammoniak, Amin, Hydrazin permeabel, für den Elektrolyten (3) impermeabel ist. Die auf der Elektrolytseite der Membran aufgebrachte Iridiumschicht ist mit einem Überzug (12) aus Iridiumoxid abgedeckt. Dieser Überzug (12) ist jeweils durch eine dick ausgezogene Umrandung der Elektroden (1, 2, 9) angedeutet. Die Gegenelektrode (2) und die Referenzelektrode (9) bestehen ebenfalls aus einem Trägermaterial aus Iridium, welche auf ihrer mit dem Elektrolyten in Beziehung kommenden Oberfläche mit einem Iridiumoxidüberzug (12) bedeckt sind. Die Gegenelektrode (2) ist Teil der Wandung des Gehäuses (4). Als Elektrodenträger dient eine poröse PTFE-Membran, deren zur Umgebung hin weisende Oberfläche mit einem Filter (13) abgedeckt ist. Der mit dem Iridiumoxidüberzug (12) versehenen aktiven Fläche der Meßelektrode (1) gegenüberliegend ist eine Ionentauschermembran (11) vorgesehen, welche den Zutritt von im Elektrolyten (3) gelösten Hydroxidionen zur Meßelektrode (1) verhindert, obgleich die Meßelektrode (1) vom Elektrolyten (3) bedeckt ist. Alle Elektroden (1, 2, 9) besitzen Meßanschlüsse (6, 7, 10), welche durch das Gehäuse (4) hindurchgeführt und an eine Auswerteeinheit (8) zur weiteren Verarbeitung der Meßsignale angeschlossen sind. Die Auswerteeinheit (8) enthält zudem einen Potentiostaten, mit dessen Hilfe das Bezugspotential zwischen Referenzelektrode (9) und Meßelektrode (1) festgelegt und aufrechterhalten wird.

Das Filter (13) ist in Fig. 2 im Schnitt detaillierter dargestellt. In einem hülsenförmigen Filtergehäuse (14) ist eine Füllung (15) aus Aktivkohle aufgenommen. Die Aktivkohle ist imprägniert, und zwar wahlweise mit Phosphorsäure oder Zinksulfat (ZnSO₄). Zur Umgebung hin ist die Füllung (15) durch eine Kunststoffscheibe (16) mit einer zentralen Bohrung (17) von etwa 1 mm abgeschlossen. Zur Gegenelektrode (2) weisend ist das Gehäuse (14) mit einer porösen Polyethylenscheibe (18) abgeschlossen.

## Patentansprüche

1. Elektrochemische Meßzelle zur Bestimmung von Ammoniak, Aminen, Hydrazin und Hydrazinderivaten in einer gasförmigen oder flüssigen Meßprobe, mit mindestens einer Meßelektrode und einer Gegenelektrode, von denen zumindest die Meßelektrode mit einem ein Übergangsmetalloxid enthaltenden Überzug versehen ist, und die in einer mit einem löslichen Elektrolyten gefüllten Elektrolytkammer aufgenommen sind, welche zur Meßprobe hin durch eine permeable Membran abgeschlossen ist, **dadurch gekennzeichnet, daß** die Oxidbestandteile des Überzugs (12) Rutheniumdioxid (Ru0₂) oder Iridiumdioxid (Ir0₂), oder ein Gemisch aus beiden Oxiden sind.

2. Elektrochemische Meßzelle nach Anspruch 1, **dadurch gekennzeichnet, dass** die Meßelektrode (1) aus Iridium und der Überzug aus Iridiumdioxid besteht.

3. Elektrochemische Meßzelle nach Anspruch 1 oder 2, **dadurch gekennzeichnet, dass** zu den Oxidbestandteilen eine Beimengung von Titandioxid (Ti0₂) und/oder Zinndioxid (Sn0₂) zugesetzt ist.

## Claims

1. Electrochemical measuring cell for determining ammonia, amines, hydrazine and hydrazine derivatives in a gaseous or liquid measuring sample, having at least one measuring electrode and one counter-electrode, at least the measuring electrode of which is provided with a coating containing a transition metal oxide, and which are housed in an electrolyte chamber filled with a soluble electrolyte, the chamber being sealed towards the measuring sample by a permeable membrane, **characterised in that** the oxide components of the coating (12) are ruthenium dioxide (RuO₂) or iridium dioxide (IrO₂), or a mixture of both oxides.

2. Electrochemical measuring cell according to claim 1, **characterised in that** the measuring electrode (1) is made of iridium, and the coating of iridium dioxide.

3. Electrochemical measuring cell according to claim 1 or 2, **characterised in that** an admixture of titanium dioxide (TiO₂) and/or tin dioxide (SnO₂) is added to the oxide components.

## Revendications

1. Cellule électrochimique de mesure destinée à détecter la présence d'ammoniac, d'amines, d'hydrazine ou de dérivés d'hydrazine dans un échantillon de mesure gazeux ou liquide, comprenant au moins une électrode de mesure et une contre-électrode, parmi lesquelles au moins l'électrode de mesure est équipée d'un revêtement contenant un oxyde de métal de transition, les électrodes étant logées dans une chambre à électrolyte remplie d'électrolyte soluble qui est fermée, en direction de l'échantillon de mesure, par une membrane perméable, **caractérisée en ce que** les oxydes du revêtement (12) sont le dioxyde de ruthénium (TuO₂) ou le dioxyde d'iridium (IrO₂), ou un mélange des deux oxydes.

2. Cellule électrochimique de mesure selon la revendication 1, **caractérisée en ce que** l'électrode de mesure (1) est constituée en iridium et le revêtement est constitué en dioxyde d'iridium.

3. Cellule électrochimique de mesure selon la revendication 1 ou 2, **caractérisée en ce qu'**est ajouté aux oxydes, un additif de dioxyde de titane (TiO₂) et/ou de dioxyde d'étain (SnO₂).
